# EUROPEAN PATENT SPECIFICATION

(11) **EP 2 535 832 B1**
(45) Date of publication and mention of the grant of the patent: **26.04.2017**
(21) Application number: 11170264.3
(22) Date of filing: 17.06.2011
(51) Int. Cl.: G06F 21/00

(54) **A method for operating a virtual machine over a file system**
Verfahren für den Betrieb einer virtuellen Maschine auf einem Dateisystem
Procédé de fonctionnement d'une machine virtuelle sur un système de fichier

(43) Date of publication of application: 19.12.2012
(73) Proprietor: Simulity Labs Ltd, Ffordd Penlan, Parc Menai Bangor Gwynedd LL57 4HJ (GB)
(72) Inventor: Bacca, Nicolas, 92400 Courbevoie (FR); Mesnil, Cédric, 78340 Les Clayes-sous-Bois (FR); Tomaz, Olivier, 91310 Longpoint-sur-Orge (FR)
(74) Representative: Richardt Patentanwälte PartG mbB

(56) References cited:
- WO-A1-98/19237
- US-A1- 2006 047 954
- US-A1- 2009 031 396

## Description

### Field of the invention

The invention relates to the field of data access management, and more particularly to operating a virtual machine over a file system.

### Background and related art

Embedded systems such as smart cards are used in a variety of fields, for example as an electronic mean of payment, as phone card, as insurance card, as access cards for secured buildings or as SIM cards in telephones.

A smart card is any pocket-sized card with embedded integrated circuits that can run programs and can communicate with a card reader. The card issuer or card manufacturer may have installed 'native' methods on a non-volatile storage of the smart card which are not associated with security restrictions.

Java card is a standard being specially adapted for the limited memory and processing resources of smart cards and allowing the simultaneous execution of multiple installed programs on the card. The Java card architecture allows installing of additional programs on the card even after the card was manufactured and delivered to the customer, thereby allowing a flexible update of a card's functions. The system on the card comprises the operating system, the Java Card virtual machine and an API of the virtual machine which together constitute the Java Card runtime environment (JCRE). Java applications may be provided by non-trustworthy third parties and can only be executed according to the Java Card specification under several security restrictions. Such security restrictions relate to type checking, mandatory instantiation of variables, usage of an applet firewall prohibiting applets running on a Java Card to access data of another applet and the prohibition the use native methods by the Java-based applications.

Embedded applications are often constrained to develop and reinvent each time a storage abstraction layer to take into account the limitations of the platform. Accordingly, the development of a Java Card applet differs from the development of a conventional Java application among other aspects in that data exchange between different applications running on a smart card is difficult and largely limited to the use of byte arrays. The data exchange between applications is restricted for security reasons, because erroneous applications or applications having been designed to spy for secret keys or other secured data on the smart card may cause a significant economic harm for the cardholder. As a consequence, an additional layer has to be implemented in order to store and/or load high level data to and from these byte arrays. Therefore, the existing approach of storing and loading data and to exchange data between different Java card applets according to the Java card specification is highly inefficient.

On the other side, exchanging data between different applications is an important issue, because the functions executed by smart cards tend to be of increasing complexity and tend to require the interaction of multiple applications fulfilling different, highly specialized functions.

US20060047954 A1 describes a system and method for providing application programs the right to access a data item while preventing security breaches, allowing applications and data to be independently updated, and allowing multiple applications to share the data item. Each application program has associated therewith a first public key and each data file has associated therewith a second public key. If these public keys match for a particular application program and data file, the application program is granted access to the data file.

According to an approach known as 'fs hive for virtual applications', a sub-tree of a file system is dedicated to an application by means of the UNIX CHROOT concept. Application programs running on a virtual machine are isolated from each other by prohibiting that one of said application programs can "see" or access file system entries belonging to a file system node whose root according to the CHROOT property of said node is another instance than said application. This approach has, however, the disadvantage that when an application is destroyed, another application cannot access the file system node sub-tree of the destroyed application and the data is lost. In addition, only one single application program, the application acting as root according to the CHROOT property of a file system node, can access said node.

Therefore, there is a need in the art to provide a method allowing a secure exchange of data between different applications given the security constraints of particularly secure runtime environment of embedded systems such as the Java card runtime environment commonly used in embedded systems.

### Summary

It is an objective of the invention to provide an improved method for operating a virtual machine over a file system for managing data access. This objective is solved by the features of the independent claims. Preferred embodiments of the invention are given in the dependent claims. Operating a virtual machine over a file system means that the virtual machine in operation is operable to access a file system and/or use a functionality provided by the file system.

A 'virtual machine' (VM) as used herein is a computer implemented method or process for providing a platform independent programming environment that abstracts away details of the underlying hardware or operating system. Accordingly, a virtual machine allows a program to execute in the same way on a variety of different platforms and eases the process of software development. A virtual machine can be, for can be, for example, and without limiting the scope of the invention, a Java virtual machine, a DKard virtual machine, a Java Card virtual machine, the Parrot virtual machine, or a dalvik virtual machine. In the following, embodiments being based on the Java card specification will be described without limiting the scope of the invention to said particular standard.

A 'file system' (FS) is a computer implemented method of storing and organizing data objects, in particular computer files and computer directories, to a storage volume. In particular, a file system according to embodiments of the invention may be a dedicated file system. The file system structure is both an easy and simplifying process for storing data objects. State of the art file systems organize said data objects for manipulation and retrieval by the operating system of a processing device. A file system is e.g. a manner of organizing flash memory of a smart card into blocks to store data and can be used as a frontend for all entities of a smart card to access the flash memory to store long-term data. A directory is a list of element, each element being a directory or a sequence of data. A directory may act as a drawer or cabinet within a file system of a computer and is used for organizing data.

A 'backend application' as used herein encompasses any application running on a computer system being connected to a smart card and being operable to access said smart card, e.g. via a card reader or any other interface. To the contrary, the term 'application program' refers to applications being executed by the processor of the smart card and running on the virtual machine of the smart card. Said 'application programs' comprise, for example, Java applets having been specified according to the Java Card specification.

A 'class file package' as used herein refers to any group of files comprising source code specifying instructions of an application program to be run by the virtual machine. For example, the grouping of class file into class file packages is a well known organization principle when developing Java-based software applications.

In one aspect, the invention relates to a computer-implemented method for operating a virtual machine over a file system, whereby the file system comprises a plurality of file system nodes and whereby each file system node is assigned with a first user-ID and/or a first group-ID. A first application program is running on the virtual machine. Said computer-implemented comprises the following steps:
- assigning the first application program a second user-ID and/or a second group-I D,
- accessing at least one of the plurality of file system nodes by the virtual machine for providing read and/or write access for the first application program to said at least one file system node,
- evaluating, by the file system, the first user-ID and/or first group-ID of the at least one file system node and the second user-ID and/or group-ID of said first application program, whereby the evaluation returns a positive result only if at least one of a set of conditions applies, the conditions being selected from the group consisting of:
   ▪ if the first user-ID of said file system node matches the assigned second user-ID, or
   ▪ if the second user-ID is a super-user-ID, or
   ▪ if the second group-ID is a super-group-ID, or
   ▪ if the first group-ID of said file system node matches the assigned second group-ID, or
   ▪ if the user being assigned the second user-ID belongs to a user group owning the assigned first group-ID of said file system node, or
   ▪ if the file system node is marked as globally accessible,
   and whereby the evaluation returns a negative result if none of said condition applies,
- granting access by the file system to the first application program to said at least one file system node in case the evaluation result is positive, and
- prohibiting by the file system the access of the first application program to said at least one file system node if the evaluation result is negative.
This is advantageous, as the VM delegates security mechanisms protecting against unauthorized data access and providing application isolation. The evaluation whether an application requesting access to a FS node has the according permissions may already be provided by some state-of-the art file systems such as ext2 or ext3 FS. By making use of said FS features, the VM requires less processing power for isolating applications running on a VM from each other. According to preferred embodiments, the method is executed on an embedded system operating the virtual machine. Without limiting the scope of the invention, said embedded system may be a smart card. A positive result can be, for example, a Boolean 'TRUE' value and a negative result a Boolean 'FALSE' value.

The terms 'granting access' and 'prohibiting access' will respectively be used in the following in its broadest form and cover at least read and write access. According to some embodiments, said access may also comprise the privilege to rename a file system node. The term 'matching' refers to the process of comparing data objects with each other in respect to one or more matching criteria. A matching criterion may be 'identity'. For example, two user-IDs match if they are equal. Said matching criterion can also be 'membership'. For example, in case a user-ID of an application program requesting access to a node is matched against a group-ID of said node, the matching may return a positive result in case the user having assigned said user-ID is member of a group having assigned said group-ID. A 'super-user' is a user having more privileges than 'normal' or 'default' users. Accordingly, a super-group is a group whose members have more privileges than 'normal' or 'default' users.

According to some embodiments, the second user-ID and/or second group-ID is assigned to the first application program by the VM. This is advantageous, as the VM is able, by assigning a particular user-ID or group-ID to an application program, to dynamically manage and change the access rights of said application program in respect to nodes of the FS. By assigning a group-ID of a group comprising a plurality of users to an application program, said application program is granted access to all file system nodes having assigned said group-ID.

According to embodiments, whenever an application program creates and stores data to a particular node, the user-ID and/or group-ID of said application program is assigned to said node. In case said node is already existing and has already assigned the user-ID and/or group-ID of the application program, the application program may be granted access to the node by the filesystem without a re-assignment of the user-ID and/or group-ID..

According to the current Java Card specification, all data of an application program are removed when the application having generated said data is removed from a smart card. In a further beneficial aspect, embodiments of the present invention allow to reuse data having previously been created by a first application program by another application program even in case the first application program has meanwhile been deinstalled from the smart card. This effect may be reached by providing a VM which is operable to dynamically re-assign user-IDs and or group-IDs to newly installed application programs. For example, a SIM application can be enabled to share phone book data with one or more second STK application programs, thereby enhancing the functionality of said STK application programs.

According to some embodiments, each user-ID may correspond to a human user or a backend application accessing the smart card via a card reader. The smart card, e.g. by means of its operating system or by means of a module of the VM running on the smart card, assigns the logged-in user and/or a backend application a user-ID and/or a group-ID. The accessing backend application may initiate or connect to an application program being executed by the processor of the smart card and running on the smart card's VM. According to some embodiments, the VM assigns each application program having been initiated by a backend application program the user-ID and/or group-ID of said backend application. According to other embodiments, the user-IDs and/or group-IDs assigned to each application program by the VM do not correspond to a particular user or a particular backend application but rather are unique identifiers generated by the VM for the individual application programs. Said 'application IDs' are, for the sake of simplicity, herein also subsumed under the expression 'user-ID'.

According to embodiments, two or more application programs have assigned the same group-ID in dependence on their respective class file package identifiers. According to some embodiments, said shared group-ID is automatically assigned by the VM to all application programs whose class files are contained within the same class file package. This is advantageous, because applications comprising class files belonging to the same class file package can be assumed to have been issued by the same software developer.

According to embodiments, and contrary e.g. to a UNIX-file system, either all read-, write- and execute ('rwx') permissions are granted collectively to the requesting application program, or any 'read', 'write' and 'execute' operation on said node by the application program requesting access is completely prohibited. This feature is advantageous, as it reduces the complexity and time needed for evaluating the access permissions of the requesting application program to said node, and processing time is a critical aspect when operating smart cards.

According to embodiments, each node of the FS has assigned a 'group ID'. In case access is prohibited based on the evaluation of the user-ID alone, access may still be granted to a requesting application program by evaluating its group-ID. In case an application program having assigned a second group-ID requests access to a node having assigned a first group-ID, said first group-ID and the second group-ID are evaluated by the FS. In case the first group-ID matches the second group-ID, the requested access is granted; otherwise, access is denied. Contrary to e.g. a UNIX-file system, either all read-, write- and execute ('rwx') permissions are granted collectively to the requesting application program based on said evaluation result, or any 'read', 'write' and 'execute' operation on said node by the requesting application program is completely prohibited. According to some embodiments, the matching of group-IDs in addition comprises the step of determining, whether the second user-ID of the application program relates to a user who belongs to a user group which owns the first group-ID assigned to the requested node. For instance, the FS may maintain a FS-internal registry of users and groups for evaluating the group membership. This is advantageous, because the evaluation of group membership allows for a more fine-grained access right management and for managing access rights of multiple different application programs in an identical way.

According to some embodiments, the first user-ID and/or first group-ID are assigned to the at least one FS node by the VM. This feature is advantageous, as the VM is able, by assigning a particular user-ID or group-ID to a FS node, to dynamically specify which application programs running on the VM are allowed to access the data content of a particular node of a FS. If, for example, the user-ID or group-ID assigned to a particular application program can for some reason not be changed dynamically during runtime of an application program, the VM can still dynamically grant or deny a particular application program access to a particular node simply by dynamically, i.e., during the runtime of the application program, switching the user-ID and/or group ID assigned to a file system node.

Embodiments according to which the VM is operable to dynamically reassign user-IDs and/or group-IDs to individual nodes of the FS as well as to individual application programs are particularly advantageous, because the VM is in full control of the FS-access rights of all application programs running on the VM and optionally also of other programs or native routines running on a smart card or similar embedded device.

According to some embodiments, the method further comprises the step of dynamically assigning, by the VM, a third user-ID and/or a third group-ID to the first application program, thereby replacing the second user-ID and/or group-ID and dynamically changing the access rights of said first application program in respect to the file system nodes. The VM thereby acts as access broker for all application programs running on said VM. Thereby, the final access control step is delegated to the FS. Accordingly, the FS can be considered as slave in the security chain while the VM executes the function of a master controller assigning access rights to applications depending on the operation to perform, e.g. reading or writing data objects such as private, public or static variables.

According to further embodiments, the step of granting access to the first application program comprises the steps of receiving, by the VM, a read or write request from the first application program for executing a read or write operation on said file system node. In case the requesting first application program is granted access to said file system node, the VM executes a read or write operation on said file system node, whereby the VM writes first data provided by the first application program to said file system node, and/or whereby the VM forwards second data read from said file system node to the first application program. Executing read or write operations via the VM protects data stored in the file system nodes from illegitimate direct access by an application program and therefore enhances the security of sensitive data stored in a smart card.

According to some embodiments, the file system nodes comprise file system nodes of a first, a second and a third node type. According to said embodiments, the user-ID of a file system node of the first node type is a user-ID of a super-user. A super-user is a user having super-user privileges, i.e., having the privilege to access any node of the file system. The first user-ID of a file system node of the second node type is a user-ID of a normal-user, whereby a normal user is a user having default privileges. A file system node of the third node type is marked as globally accessible. According to said embodiments, the VM has assigned the super-user-ID. The method further comprising the steps of:
- using, by the VM, file system nodes of the first node type for storing system data required by the VM for execution, whereby the file system prohibits any first application program from accessing file system nodes of the first node type and allows the VM to access file system nodes of the first, the second and the third node type; accordingly, nodes of the first node type can be accessed by the VM but not by any of the application programs;
- using, by one or more of the at least one first application programs, file system nodes of the second node type for storing runtime data required by said one or more first application programs for execution, whereby each second user-ID respectively assigned to the one or more first application programs is a normal-user-ID, whereby the file system prohibits any of the one or more first application programs from accessing file system nodes of the second node type in case the evaluation of the respectively assigned first- and second user-IDs and/or group-IDs returns a negative result, and
- using by the VM and by said one or more first application programs the file system nodes of the third node type for storing public data, whereby the file system grants access to any of the one or more first application programs.

The super-user-ID of the VM in combination with the file system ensure that the VM can be identified by the file system as being authorized to access file system nodes of the first node type and all other node types while application programs having assigned non-super-user-IDs are blocked from accessing a node of said first node type.

According to some further embodiments, a first package identifier of a first program class of an application program having previously stored data to one of the plurality of nodes is used as first group-ID of said node and whereby a second package identifier of a second program class of the at least one first application program is used as the second group-ID. According to some of said embodiments, the file system nodes comprise file system nodes of a fourth node type, whereby the first group-ID of a file system node of the fourth node type is the package identifier of a class of an application program having previously written data into said node, the method further comprising the step of using, by one or more of the at least one first application program, file system nodes of the fourth node type for storing class file data, e.g. static field values, whereby the file system prohibits any of the one or more first application programs from accessing file system nodes of the fourth node type in case matching the package identifiers of said first application programs against the group-ID assigned to said node of the fourth node type returns a negative result. Using package identifiers as group-IDs and matching said group-IDs of nodes and requesting application programs is advantageous, because it can be assumed that Java classes belonging to the same Java package were provided by the same instance and do therefore not constitute a security risk. Depending on the embodiment, the comparison of package IDs may be executed on any level of the package hierarchy. The lower the level which is used for comparison, the stricter the access control by the VM.

According to embodiments, said three file system node types are a result of the specification of the super-user and one or more 'normal' users, the use of a 'globally accessible' flag for file system nodes of the third node type, and the read and/or write access control executed dynamically by the VM in cooperation with the file system. Said features are advantageous, as they provide a valid firewall which isolates system data of the VM from the application programs and which isolates the data of each particular application program from all other application programs provided the VM has not explicitly granted said access by means of assigning or re-assigning user- and/or group-IDs to FS-nodes and/or application programs.

According to embodiments, each application program is only allowed to 'see', i.e. recognize the existence, of nodes with a matching user-ID or group-ID and all their respective direct and indirect child nodes. In other words, the VM limits the view of the individual applications running on the VM. As a result, each application program can merely see and operate on a subset of nodes having assigned the appropriate user- and/or group-IDs. Thereby, the VM guarantees application isolation and prohibits a user from even trying to access a FS node he has no permission for.

According to embodiments, the VM is a system daemon running on the smart card.

According to further embodiments, the file system nodes are of three different structural node types: a node of said file system can be a file, a directory and/or a symbolic link, whereby said symbolic link points to a directory node or a file node. Said feature is advantageous as it allows to create symbolic links between different nodes and to organize file nodes hierarchically by storing multiple file node within one directory node of a FS node tree.

According to further embodiments, an authentication proxy is operable to execute an additional security operation for granting or prohibiting the first application program access to the at least one file system node. The security operation can be, for example, the evaluation of a white-list, the evaluation of a security token, and/or the execution of a cryptographic authentication method. The security token can comprise biometrical data, e.g. a fingerprint of a user, certificates and/or a passphrase.

Depending on the embodiment, the authentication proxy can be implemented as a component of the VM, as a component of one of the first application program or as an individual additional application program running on the VM. According to further embodiments, the authentication proxy is a remote application program accessed by the VM over a network. According to still further embodiments, the authentication proxy is a trusted virtual application being interoperable with the file system and running over the VM. According to still further embodiments, the authentication proxy is a component of the VM.

Depending on the embodiment, the authentication proxy may be implemented as an application program or as a native routine not running on the VM but being interoperable with the first application program requesting to access a particular FS node. The authentication proxy may also be implemented as an additional component of the FS. Using an authentication proxy is advantageous, as it allows to make use of additional, particularly secure authentication schemas for storing and reading data from the file system nodes. Said particularly secure authentication schemas, which may be based e.g. on the evaluation of biometric data or the like, can be used on top of the evaluation of user- and group-IDs by the FS before access is granted to a file system node.

According to some further embodiments, the authorization proxy uses a second authentication proxy to process the authorization request. Said proxy chaining/proxy forwarding is advantageous, as it provides additional, independently maintained authentication schemas which can freely be combined with each other, thereby minimizing the risk of unauthorized access to the data contained in the file system nodes. Even in case the authentication schema of one authentication proxy should be cracked, one or more of the remaining authentication proxies and their respective authentication schemas would prohibit unauthorized access. For example, in case a passphrase would have been uncovered by a malware program, thereby cracking the security schema of a first authentication proxy, access of said malware program would be prohibited by a second authentication proxy evaluating another security token, e.g. biometric data.

According to further embodiments, said additional authentication proxy may be a server computer, e.g. a Kerberos server, connected to the smart card via a network. An application program may request access to a particular FS node. The file system grants access to said application only in case said program is able to successfully authenticate itself at the Kerberos server. After the application has successfully authenticated at the Kerberos server and after in addition the FS has successfully authenticated itself at that Kerberos server, the Kerberos server authenticates the application at the file system. The Kerberos authentication scheme is particularly advantageous, because man-in-the-middle-attacks can be successfully prohibited.

Evaluating a White-List: A white-list is a set of user-IDs and/or group-IDs which share the same security permissions in respect to data stored by one or more application programs. The evaluation of the white-list comprises the steps of matching the second user-ID and/or second group-ID of the first application program against a plurality of fourth user-IDs and/or group-IDs of a white-list; access to the first application program to the at least one file system node is only granted in case said second user-ID and/or second group-ID matches at least one of the plurality of fourth user-IDs and/or group-IDs.

According to embodiments, a white-list of user-IDs or group-IDs which are considered as trustworthy is maintained by the FS. The FS determines, whether the second user-ID and/or second group-ID matches any of the user-IDs or group-IDs of the white-list and grants the requesting application access to the requested node only in case of a match. Otherwise, access of the requesting application to the node is prohibited by the FS.

According to some embodiments, the white-list of user-IDs and/or group-IDs used by the FS is the same for all nodes of the second node type. According to other embodiments, the FS manages a plurality of application-specific white-lists. Whenever a first application writes data to a node, an application identifier is stored by the FS in association with said node. If another application program running on the VM request access to the data of said application node, the FS uses a white-list being particular to said first application (application identifier) in order to evaluate if the user-ID or group-ID assigned to said other application program matches any of the group-IDs or user-IDs of said application-specific white-list.

Evaluating a Security Token: Security tokens may be evaluated e.g. by a token evaluation module of the FS or by an authentication proxy. According to some embodiments, the evaluation of a security token may comprise the execution of a cryptographic operation. Said cryptographic operation can comprise evaluating a shared secret with a zero knowledge algorithm or executing a public key cryptography based algorithm using e.g. certificate chains or other means of verifying the authenticity of a requesting application. A zero knowledge algorithm is an interactive method for one first party (e.g. the access requesting application program) to prove to another party (e.g. the FS) that a mathematical statement is true without revealing anything other than the veracity of the statement. The FS may then grant access to any application which is operable to prove that said particular statement is true. A variety of authentication schemes of different security levels can be provided depending on the particular needs of the application and/or the smart card ranging from Kerberos based authentication schemas to 'anonymous' zero knowledge algorithms.

According to some embodiments, the access control provided by evaluating a security token is executed for each individual node of the file system. This is advantageous, because it allows for a very fine-grained specification of access rights for each particular node, whereby the authorization schema for a parent node is not necessarily the same for its child nodes.

Data Encryption: According to further embodiments, the method further comprises the steps of encrypting, by the VM, the first data before said first data is written into said file system node, and/or decrypting, by the VM, the second data before forwarding said second data to the first application program. Said encryption/decryption step is advantageous, as this step is an additional safety measure against unauthorized data access.

According to further embodiments, the method further comprises the steps of encrypting, by the FS, the first data before said first data is written into the file system node, and/or decrypting by the file system the second data, the second data being decrypted before said second data is received by the VM. Said encryption/decryption step executed by the FS is advantageous, as this step is a safety measure against unauthorized data access. Depending on the embodiment, FS-based encryption/decryption and VM-based encryption/decryption can respectively be executed alone or can be applied in combination.

According to some further embodiments, the VM-based encryption is combined with the FS-based encryption of data, thereby providing for a particularly save method to store and read data to and from a file system node. The encryption algorithm used by the VM or by the FS may be identical or may differ from each other. The data is, according to said embodiments, encrypted and decrypted twice in two independent encryption or decryption steps. Accordingly, the data is protected from unauthorized access even in case one of said encryption/decryption algorithms would have been cracked. For a write operation, the FS receives data having been already encrypted by the VM and encrypts said already encrypted data a second time. Reading said data comprises a first decryption step executed by the FS and a second decryption step executed by the VM.

According to embodiments, data encryption is performed by using an offset based stream cipher to execute an XOR operation on data to be stored in a node of the FS. Said XOR operation can be executed, for example, by using counter mode (CTR mode) to avoid the need of deciphering/ciphering the whole data to be written in and/or read from the node. CTR mode enables the repeated and secure use of a block cipher under a single key. Depending on the embodiment, the key is derived by rommask (ROMKEY), from a random number provided by the smart card upon first startup, by a combination of a user-ID or group-ID of the application program and an identifier, e.g. a hash-value, of the accessed file. A sequence of the first bits or bytes of the file to be accessed is used as initialization vector for the block cipher. Said initialization vector can be based e.g. on a DES, AES, or similar cryptographic algorithm. A block of encrypted data is generated which is unique for the given sequence of the first bits or bytes of the file. Even in case only one single byte should be stored via said approach, the cryptographic algorithm cannot be cracked.

File-System structure: File system structures known in the art are commonly based on a root directory which is copied into RAM memory, thereby preventing the VM from executing many read operations to slow non-volatile storage medium. As a major drawback, when retrieving a file system entry by path, its path must be browsed from the root tree requested. According to embodiments to the invention, however, such a root directory structure is not needed as all file system nodes can be retrieved and accessed by path and/or by inode number, whereby the term 'inode' as used herein refers to a FS node identifier. The access control is the same for both access modes. Embodiments allowing to access each node by means of an inode number are advantageous as the path-based way of accessing data in a file system is not fast enough on embedded devices such as a smart card: the path has to be resolved in order to retrieve the file start in the file system each time an application tries to access a node.

Mappings: According to further embodiments, the file system is based on a mapping, the mapping being a physical-logical mapping, herein referred to as 'pl-mapping', and/or a geometrical mapping. The pl-mapping is a mapping of non-volatile physical memory blocks of one or more physical storage media to logical memory blocks of one or more logical storage volumes. The geometrical mapping is a mapping of one or more memory blocks of a non-volatile storage medium and one or more memory blocks of a volatile storage medium to logical memory blocks of one or more logical storage volumes. The non-volatile memory blocks can be, for example, part of an EEPROM storage, and the volatile memory blocks can, for example, belong to the RAM.

A file system being based on a mapping as used herein is a file system which comprises a mapping which is used by at least some of the FS routines during execution.

According to embodiments, the FS is implemented based on a layered software architecture, wherein the pl-mapping is implemented by low-level routines of said architecture and the geometrical mapping is implemented by high-level routines of said architecture on top of the pl-mapping.

Transactional file system: According to some embodiments, the file system is a transactional file system and/or a journaling file system. A transaction may comprise one single operation or a sequence of operations requested by the VM and/or virtual applications. A transaction is a group of operations that are atomic, consistent, isolated, and durable. Either every operation in an atomic group of operations must succeed, or the effects of all of them must be undone. The feature 'consistency' means that the data is consistent after the transaction. The property 'isolation' implies that one transaction in progress may not affect any other transaction. The property of 'durability' requires that the effects of a transaction are persisted. Accordingly, a transactional FS is advantageous as it may provide for the above functionalities, guarantee data consistency and enable the VM to execute said algorithms in a more efficient manner.

For providing a transactional FS, it must be ensured that a transaction is performed correctly or not at all. In general, state-of-the art VMs implement this functionality by means of an in-RAM buffer. All data are modified in-RAM before being committing in a persistent storage. In case the processor of the smart card is stopped e.g. due to a power loss, all modifications still in RAM are destroyed without any modifications of the persistent storage. A major constraint of this in-RAM system known in the art is that transaction is limited to the in-RAM buffer size, which is often very small, in particular for embedded devices such as smart cards.

According to embodiments of the invention, non-volatile storage blocks are used to store modified versions of FS nodes before a transaction having introduced said modifications is committed. These additional transacted non-volatile memory blocks are cleared after an abort operation, e.g. explicit programmatic abort, system crash or power loss.

According to embodiments, the file system provides transaction support to aggregate multiple operations into a single atomic operation, wherein concurrent and/or nested transactions can be aggregated.

According to embodiments, the pl-mapping supports transactional operation over FS nodes by marking transaction's non-volatile memory blocks as 'transacted'. Only data stored onto non-volatile medium are involved by transactions. Transactions can be nested and/or concurrent, and this recursively. Children transactions inherit modifications made into parent transactions. Transactions can be seen as multiple unstable versions of the file system content. As a transaction may involve multiple FS nodes, totally different versions of the FS nodes can co-exist. Concurrent transaction trees are isolated and modifications are not available between concurrent transactions.

According to embodiments, upon each creation of a transaction, said transaction is given a transaction identifier. According to further embodiments, the file system assigns each transaction in addition a user-ID and/or group-ID in dependence on the instance having called the transaction. Said instance can be, for example, the VM or any application running on the VM. The VM, in addition to the FS-node access control based on the user- and/or group-IDs assigned to each application program and each FS-node, checks whether a transaction requesting access to a particular FS-node has assigned a user and/or group ID being allowed to access a particular FS-node.

As per user and/or group ID, according to embodiments there exists a current transaction identifier in the filesystem. This identifier can be used by the VM for selecting the one of said versions of the file system for upcoming file system operations. Said selected version is also referred to as current version. Accordingly, the transaction in which all said further file system operations will take place is called 'current transaction'. Any virtual application and the virtual machine can make use of transactions.

According to embodiments, the transactions once started are alive until aborted or committed. After commit, changes made by a transaction are available to other transactions and to non-transactional file system operations, e.g. to a virtual application that requests access to a FS node having being created under transaction. Potential conflicts between two transactions are managed by the file system. Alive transactions do not correspond to conflicting versions.

For example, a first transaction may be created to access a FS node. Upon creation of the first transaction, a FS node identifier of said FS node may be allocated to said first transaction. As a consequence, the FS blocks all other transactions created at a later moment in time than the first transaction from allocating said FS node identifier and from accessing said FS node. As a result, said FS node identifier actually does not 'exist' for other transactions nor for non-transactional accesses. After a successful commit of said first transaction, or after a deletion of said first transaction, said FS node identifier may be, however, re-allocated to another transaction.

According to embodiments, transactions policy against unforeseen events, e.g. power shortage, can be configured by a user. Some configuration settings will require current transactions to be automatically aborted upon such events. Other configuration settings can define to keep transactional data of a current transaction until e.g. the calling application decides to commit or abort the current transaction.

According to embodiments, transactionality does not invalidate the FS node access checks but is implemented rather on top of said concept. A transaction may access FS nodes of different users, e.g. when a transaction is called by the VM having super-user privileges. However, a transaction triggered by an application having assigned normal user privileges will only be allowed to access a particular FS node if the evaluation has determined that the user-ID and/or group-ID assigned to the accessed FS node match.

After commit, changes in a transaction are available for non-transactional file system operations.

According to embodiments, the invention provides for concurrent transaction isolation, transaction transitivity (modifications in a parent transaction are available in a children transaction), transaction atomicity, transaction life time management, support of atomic single operations and concurrent transactions.

Journaling file system: A journaling file system is a file system that logs a series of changes applied on the content or other features of the file system. Changes to the file system are recorded in a log before any operations, e.g. read and/or write operations, which may be part of one single transaction, are executed, and before any permanent changes are made to the file system nodes. In case there should be an unforeseen interruption, e.g. a system crash or power shortage, during the recording of said log, the file system immediately reverts back to its state before said interruption occurred.

According to embodiments, journaling functionality is provided by means of a transaction management module of the FS which monitors all transactions to be performed on nodes of the FS and stores said transactions in the log. Said journaling functionality is, according to embodiments, also used to provide, via the memory mapping module, wear-leveling functionalities: access frequencies to storage units are monitored in order to determine which memory block is the less worn out memory block. Said memory block is, as a consequence, used for the next write operation.

Wear levelling management: According to further embodiments, the method further comprises the steps of monitoring and determining by the file system the frequency of write operations executed on each physical memory block; distributing, by the file system, write operations of the virtual machine among said physical memory blocks, whereby the distribution is based on dynamically modifying the pl-mapping, thereby ensuring that the frequency of write operations executed on the physical memory blocks is approximately identical for all physical memory blocks contained in said mapping.

Said features may be advantageous as the pl-mapping may provide a wear leveling functionality: the usage and wear of the individual physical memory blocks is distributed almost homogeneously among said memory blocks, therefore prolonging the life expectancy of the storage medium of the smart card, e.g. a flash memory drive, and ensuring the integrity of the data stored thereupon.

In one beneficial aspect, embodiments of the invention provide a file system which can provide wear leveling for both NAND and NOR -based memory types without discrimination, since the pl-mapping functionality allows to create copies of memory units, whereby said memory units may be memory blocks of any size, including also pages.

Not all storage media are equals in terms of durability and wear resistance: a NAND based memory is based on pages, each page being a memory unit to be erased to reset to a particular stage ('high state'). Reading, however, can be performed on a per byte basis. Some manufacturers only enable to read by page to maximize the access throughput. NOR based memory, in the contrary, is writable byte per byte. Generally NOR-based memory cells are more resistant to wear, even if their erasure is still performed by pages, whereby a 'page' as used herein is a fixed length block of memory that is contiguous in physical memory addressing and virtual memory addressing. A page can be in particular the smallest unit of memory allocation performed by the VM for an application program. According to embodiments applying the pl-mapping, the physical memory may be modified based on pages (the common concept for both NOR and NAND). Therefore, wear-leveling is provided both for the NAND and the NOR-based memory types.

Geometrical mapping: According to the Java Card memory model, three kinds of memory exist: ROM, RAM (volatile memory), and EEPROM (non-volatile memory). ROM is read only memory from which programs and data can only be read, but never written to. RAM and EEPROM can be read and written, whereby RAM is used for temporary storage, EEPROM is used for persisting data. So called 'persistent objects' are used to hold states and values across CAD sessions. According to the Java card technology, the lifetime of the VM corresponds to the lifetime of the smart card. If the power supply is interrupted, e.g. when the card is taken out of the card acceptance device (CAD), the VM is only temporarily stopped and stored to the EEPROM. On next reset, the object heap comprising the VM is read from the EEPROM into the RAM. In case data are not needed across multiple CAD-sessions, said data can be stored in 'transient objects' which are always stored to the RAM. 'Transient' thereby means that the contents of the fields of the object, not the object itself, have a temporary nature. So called 'persistent objects', to the contrary, are stored in an EEPROM memory.

According to embodiments, the geometrical mapping is implemented according to the following principles: each FS-node comprises one or more geometrical mapping entries. Each file represented by said FS-node accordingly consists of a sequence of non-volatile and volatile memory blocks aggregated together in a logical storage volume. Said sequence of memory blocks is transparent to the VM and is made accessible by the VM and application programs in the form of a contiguous data stream. A stream offset used by the VM or the application programs when accessing a file determines whether a volatile or a non-volatile memory block specified in the geometric mapping entries is accessed.

By mapping volatile memory blocks, e.g. of the RAM, and non-volatile storage blocks, e.g. of the EEPROM, to logical memory blocks being used by the VM to store a transient data object, it is possible to store the structural definition of said transient object into memory blocks of the non-volatile storage medium while the content of said transient objects can be mapped and stored to memory blocks of the volatile storage medium, thereby fulfilling the Java card API specification by means of said geometrical mapping provided by the file system.

According to embodiments, each FS-node comprises one or more geometrical mapping entries respectively pointing to volatile and non-volatile memory blocks so that when accessing the FS-node, e.g. for reading a file, the file system recreates the data content of the accessed FS-node. The recreation is based on the geometrical mapping entries. In case of a power shortage or system crash, the data content of the mapped volatile-memory blocks is lost.

In other words, according to embodiments, the FS is operable to provide memory space unification functionality and enables the definition of meta-file system entries which aggregate multiple memory types into a single FS entry. Each node of the FS can be considered as a concatenation of memory segments, whereby some segments may be stored in a non-volatile memory, some others in a volatile memory. The mapping underlying said aggregated memory types is made transparent to the VM, the application programs running on the VM and optionally also for all native applications that are using the file system. Memory aggregation based on the geometrical mapping allows to store parts of a data object in RAM (volatile field object) while ensuring that said parts not destroyed by referencing said object from memory blocks of the non-volatile storage volume. In case of a system crash or power shortage, the data content of said transient objects stored in RAM memory blocks is lost but information specifying the structure of the transient object itself is stored to non-volatile memory blocks (EEPROM) and is therefore not destroyed. This feature may be advantageous when managing 'transient' data according to the Java Card specification.

According to embodiments, non-volatile and volatile memory blocks aggregated by a geometrical mapping to the same logical volume is heavily used for mapping native side buffers such as APDU buffers into a virtual machine object accessible by virtual applications.

In a further aspect, the invention relates to a computer-readable non-transitory storage medium comprising instructions which, when executed by a processing device, cause the processing device to execute any of the above methods.

In still a further aspect, the invention relates to a processing device comprising a computer-readable non-transitory storage medium, e.g. a flash drive, and a processor, whereby the computer-readable non-transitory storage medium comprises instructions which, when executed by the processor, cause the processor to execute the steps of any of the above methods. Said processing device can be, for example, any processing device implemented as embedded system, e.g. a smart card. An ,embedded system' is a data processing system designed to perform one or a few dedicated functions with real-time computing constraints. It is embedded as part of a complete device often including hardware and mechanical parts. By contrast, a general-purpose computer, such as a personal computer (PC), is designed to be flexible and to meet a wide range of end-user needs.

In a further advantageous aspect, embodiments of the invention provide for a file system comprising features to support VM execution. Said features as described above can be provided, depending on the embodiment, in a plurality of different combinations.

### Brief description of the drawings

In the following embodiments of the invention are explained in greater detail, by way of example only, making reference to the drawings in which:
- Figure 1: is a flowchart of a method for operating a VM over a FS,
- Figure 2: is a block diagram of a computer system and a connected smart card,
- Figure 3: is a block diagram showing the components of the smart card in greater detail,
- Figure 4: shows some aspects of the data access management by the VM in respect to nodes of a file system, and
- Figure 5: depicts further aspects of said data access management in respect of the node types of that file system.

### Detailed description

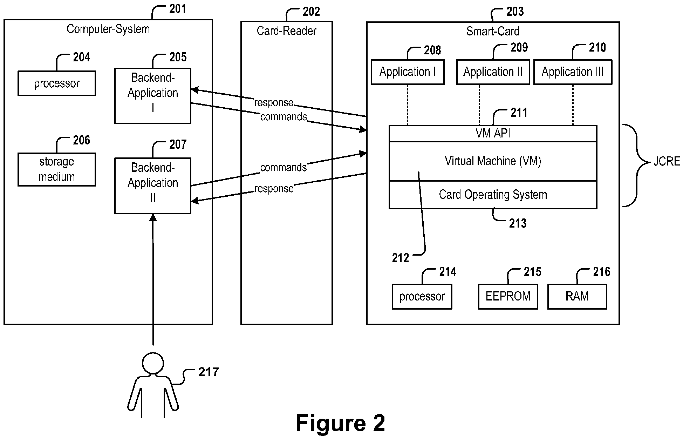

**Figure 2** is a block diagram of a computer system 201 and a connected smart card 203. The computer system, e.g. a notebook or a desktop computer, a mobile phone or any other processing device, accesses the smart card 203 via card reader 202. The computer system 201 comprises a computer readable non-transitory storage medium 206 and a processor 204. One or more backend applications 205, 207 are installed on the computer system and can be executed by the processor 204. A user 217 of the computer system can access one or more applications 208-210 running on the VM of the smart card via backend application 205, 207 which is operable to send data, e.g. in a log-in request, to the smart card and to communicate with one or more of the applications 208-210 running on the VM. In the depicted embodiments, the applications 208-210 are Java applications having been written according to the Java Card specification and which are not able to access native instructions of the smart cards directly. Rather, said applications, in the Java Card context often referred to as 'applets' run on the Java card VM 212. Each application 208-210 is operable to communicate with and make use of instructions provided by the Java Card VM via Java card API 211. Both the Java Card VM 212 and the Java Card API 211 are based on functions provided by the Card Operating system 213. Depending on the embodiment, various different implementations of the Card Operating System are possible. The computer implemented instructions of said applications and of the Java Card VM are stored in a computer readable non-transitory storage medium 215, e.g. an EEPROM memory unit, and are loaded into a volatile memory 216 for operation. Both the Java Card VM 212 and the Card Operating system are executed by the Card processor 214.

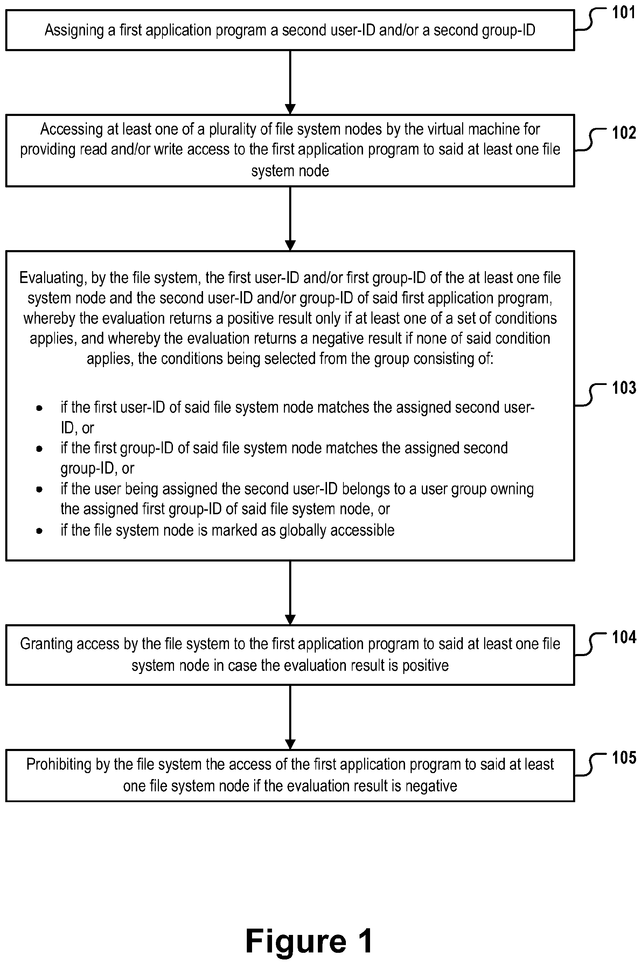

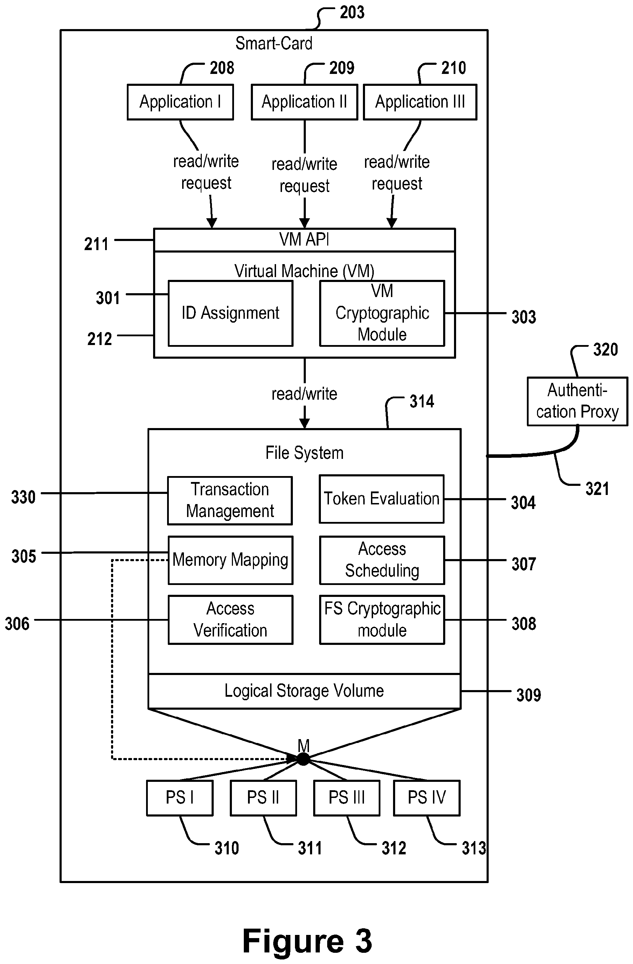

**With reference to** **figures 1** **and** **figure 3****,** a block diagram showing some components of the smart card 203 executing an embodiment of the method will be described in greater detail. According to the depicted embodiment, the VM 212 comprises an 'ID assignment module' 301 and a 'VM cryptographic module' 303. The ID assignment module assigns user-IDs and group-IDs to the individual application programs 208-210, e.g. when said application programs are instantiated (step 101). The ID assignment module of the VM 212 is further operable to dynamically reassign user-IDs and/or group-IDs of the individual application programs, thereby determining to which nodes of the FS 314 said application program read and write access will be granted. The smart card is connected to an authentication proxy 320, e.g. a Kerberos Server, via a network 321, e.g. the Internet.

Upon initialization of an application program or at any moment when executing said program, the VM assigns each application programs 208-210 a second user-ID (step 101). In case application 208 requests access to file system node FSN7, the VM accesses said requested node for providing read and/or write access to said application program 208 (step 102). Thereby, the VM provides the first user-ID and/or group-ID assigned to the requesting application program to the FS for evaluating the access right of application program 208. In step 103 the FS evaluates if the user-ID and/or group-ID assigned to application program 208 matches the user-ID and/or group-ID of node FSN7. In case said evaluation returns a positive result, application program 208 is granted access in step 104 to FSN7. Otherwise, said access is denied by the FS in step 105.

The VM cryptographic module 303 is operable to encrypt data provided by an application program 208-210 requesting write access to a particular FS node before said data is written to said node. In case the VM receives a read request from an application program having the required privileges, the VM reads the data from the corresponding FS node and decrypts the data before forwarding it to the requesting application program.

According to the depicted embodiment, file system 314 of the smart card is interoperable with the VM and comprises features which assist the VM in efficiently and securely managing access rights of different applications 208-210 to nodes of the file system. The file system 314 comprises a memory mapping module 305, a write access scheduling module 307, a token evaluation module 304, an access verification module 306 and a cryptographic module 308, described hereafter.

The cryptographic module 303 of the VM and the cryptographic module 308 of the file system may use the same or different encryption and decryption algorithms. Both cryptographic modules operate independently from each other and can therefore provide a particularly secure way of persisting double-encrypted data. Depending on the embodiment, the file system 314 may comprise any sub-set and any combination of the modules 304-308.

The memory mapping module 305 is operable to access a pl-mapping M of memory blocks of the logical storage volume 309 and memory blocks of one or more physical storage media 310-313. Said module is operable to monitor the frequency of write operations performed on each physical memory block. This data is made available to the write access scheduling module 307 which requires said data to provide wear leveling functionalities. In addition, the memory mapping module is operable to dynamically modify the pl-mapping, e.g. according to instructions provided by the write access scheduling module 307.

The write access scheduling module 307 is a module which is responsible for statistically evaluating the write access frequencies provided by the memory mapping module for determining physical memory blocks which have been used with an above-average frequency. Memory blocks are determined which have been used particularly infrequent. Said data is provided to the memory mapping module 305 which modifies the pl-mapping of physical and logical memory blocks accordingly. According to other embodiments, the functionalities provided by the memory mapping module 305 and the write access scheduling module 307 may be combined within one single module.

The access verification module 306 matches the user-ID and/or group-ID assigned to an application program requesting read and/or write access to a FS-node against the user-ID and/or group-ID of said node. In case said matching procedure returned a positive result, access is granted by the FS to the requesting application program. In case the FS comprises or is interoperable with additional programs or program modules executing an authentication check, granting access to an application may in addition depend on the result obtained by said additional programs or modules.

The token evaluation module 304 is operable to evaluate additional security tokens, e.g. biometrical data or passphrases which are made available by an application program requesting access to a particular node. The evaluation of said security token is performed on top of the evaluation of the first and second user-IDs and/or group IDs executed by the access verification module, thereby further increasing the security of the data stored in nodes of the FS 314. The token evaluation module may be operable to exchange data with the authentication proxy 320, thereby constituting a security chain.

The transaction management module 330 handles multiple concurrent and/or nested transactions executed on one or more FS-nodes. Each transaction corresponds to a version of the one or more FS nodes accessed in said transaction. Depending on the transaction currently active upon receiving a request from the file system for executing an operation, the transaction management module accesses and, e.g. in case of a write request, maybe also modifies the corresponding version of the FS-nodes.

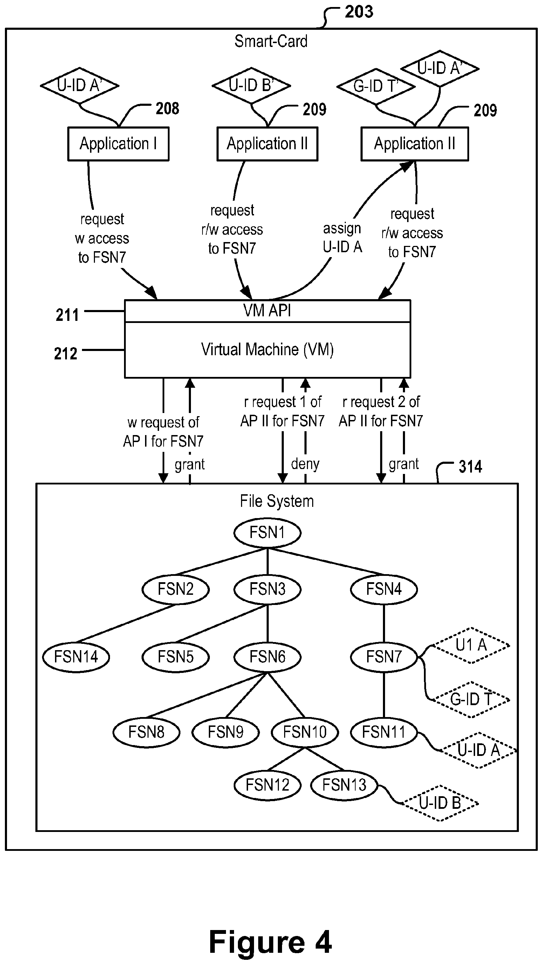

**Figure 4** shows some aspects of the data access management by the VM 212 in respect to nodes FSN1-FSN14 of file system 314. Application program 208 requests write access to node FSN7. Application program may already have assigned user-id 'U-IDA'. The FS evaluates the user-ID of the application program 208 with the user-ID assigned to FSN7 (indicated as dotted rhombus). As both user-IDs match, the FS grants access to application program 208 and data generated by application program 208 is written into node FSN7.

Application program 209 requests read access to node FSN7. Application program has assigned user-id 'U-IDB'. The FS evaluates the user-ID of the application program 209 with the user-ID assigned to FSN7. As both user-IDs do not match, and as the user corresponding to U-IDB is not member of group G-ID T, the FS denies access to application program 209. However, the VM is operable to replace the currently assigned user-ID 'U-ID B' by 'U-ID A', thereby providing application program 209 with the required access rights.

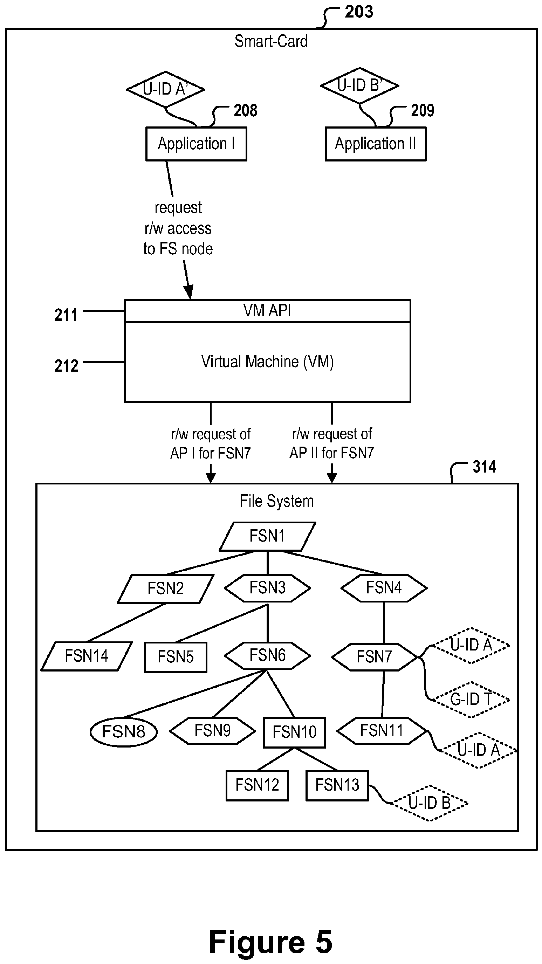

**Figure 5** depicts further aspects of said data access management of the VM 212 in respect of the node types of said file system 314. The file system structure comprises three different node types which are used to store different kinds of data. Nodes FSN1, FSN2 and FSN 14 belonging to a first node type are depicted as parallelograms. Nodes of the first node type are also referred to as 'VM nodes' as said nodes are used by the VM to store system data.

Nodes FSN5, FSN10, FSN12 and FSN13 being of a second node type are depicted as hexagonal shapes. Nodes of the second node type are preferentially used for storing user specific data, whereby said data shall be protected from all users or third parties which are not able to prove that they are permitted to read or modify said data.

Node FSN8 belongs to a third node type depicted as ellipse. Nodes of the third node type are marked as globally accessible and comprise data which can freely be shared among different applications.

Nodes FSN3,FSN4, FSN6, FSN7, FSN9 and FSN11 are of a fourth node type and are depicted as hexagons. Nodes of the fourth node type are used by the VM for storing class file data. Class file data consists of data belonging to the same class file package. The term 'class' or 'class file' hereby refers to program files comprising program code of that programming language an application requesting access to a file system nodes was written in, for example Java code. File system nodes of the fourth node type may comprise, for example, data used by static initializer methods, static field data and any other data which primarily depends on the executed application or class file bundle but does not correspond to user specific data.

Typically, during application development, class-files are organized in different bundles, also called Java 'packages'. These packages can be hierarchically organized and can comprise Java class files of multiple different Java applications. Each Java class file comprises, e.g. in an import clause, information on its respective position within the package hierarchy. When instructions of a Java application are executed on a VM, the VM is operable to determine the location of the accessing Java class within said bundle. The location of a particular class within a set of Java packages will in the following be referred to as 'package identifier'.

According to embodiments, the FS is operable to determine the package identifier of each class of a Java application requesting access to a particular node of the fourth node type and to store said package information in association with said node, e.g. in the function of a group-ID. Correspondingly, the file system is operable to store said package identifier in association with each node of fourth node type whenever a write operation is executed on said node. In case the same or another application executes a read request via the VM on said node, the FS is operable to automatically determine the package identifier of said application program requesting read access by evaluating instructions of said application program. The FS then compares the package identifier (group-ID) of the application program having written the data with the package identifier (group-ID) of the application program requesting read access. The file system grants access to the requesting application only in case a comparison of said two package identifiers returned as result that both package identifiers matched.

According to still further embodiments, the package identifiers assigned to nodes and the package identifiers of classes of an access requesting application program are not used as group-IDs but rather as additional security features which are evaluated in addition to the matching of group-IDs which may have been assigned to the application programs e.g. by the VM.

### List of reference numerals

- 101-105: steps
- 201: computer system
- 202: card reader
- 203: Smart card
- 204: processor
- 205: backend application
- 206: storage medium
- 207: backend application
- 208-210: application
- 211: Java Card API
- 212: virtual machine
- 213: card operating system
- 214: processor
- 215: storage medium
- 216: RAM
- 217: user
- 301: ID assignment module
- 303: encryption module
- 304: token evaluation module
- 305: memory mapping module
- 306: access verification module
- 307: access scheduling module
- 308: encryption module
- 309: logical storage volume
- 310-313: physical storage volumes
- 314: file system
- 320: authentication proxy
- 321: network
- 330: transaction management module
- FSN1-FSN14: file system nodes
- U-ID A,B,C: user-IDs
- G-ID T: group-ID

## Claims

1. A computer-implemented method for operating a virtual machine (212) on a smart card (203) over a file system (314) of the smart card, the file system being a process for storing and organizing data objects for manipulation and retrieval by the operating system of the smart card, the file system organizing flash memory of the smart card into blocks to store data and is used as a frontend for all entities of a smart card to access the flash memory to store long-term data,
- whereby the file system comprises a plurality of file system nodes (FSN1-FSN13), each of said file system nodes being a file, a directory or a symbolic link,
- whereby each file system node is assigned with a first user-ID (U-ID A, U-ID B) and/or a first group-ID (G-ID T),
- whereby one or more first application programs (208-209) are running on the virtual machine,
the method comprising the steps of:
- assigning (101) at least one of the first application programs a second user-ID (U-ID A', U-ID B') and/or a second group-ID (G-ID T'),
- accessing (102) at least one of the plurality of file system nodes by the virtual machine for providing read and/or write access for the at least one first application program to said at least one file system node,
- evaluating (103), by the file system, the first user-ID and/or first group-ID of the at least one file system node and the second user-ID and/or group-ID of said at least one first application program, whereby the evaluation returns a positive result only if at least one of a set of conditions applies, the at least one condition being selected from the group consisting of:
▪ if the first user-ID of said file system node matches the assigned second user-ID, or
▪ if the second user-ID is a super-user-ID, or
▪ if the second group-ID is a super-group-ID, or
▪ if the first group-ID of said file system node matches the assigned second group-ID, or
▪ if the user being assigned the second user-ID belongs to a user group owning the assigned first group-ID of said file system node, or
▪ if the file system node is marked as globally accessible,
and whereby the evaluation returns a negative result if none of said condition applies,
- granting (104) access by the file system to the at least one first application program to said at least one file system node in case the evaluation result is positive, and
- prohibiting (105) by the file system the at least one first application program from accessing said at least one file system node if the evaluation result is negative.

2. The computer-implemented method of claim 1, whereby the second user-ID and/or second group-ID are assigned to the at least one first application program by the virtual machine.

3. The computer-implemented method of claim 1, whereby the first user-ID and/or first group-ID are assigned to the at least one file system node by the virtual machine.

4. The computer-implemented method of anyone of claims 1-3, the method further comprising the step of dynamically assigning by the virtual machine a third user-ID and/or a third group-ID to the at least one first application program, thereby replacing the second user-ID and/or group-ID and dynamically changing the access rights of said at least one first application program for accessing the file system nodes.

5. The computer-implemented method of anyone of claims 1 - 4, whereby the step of granting access to the at least one first application program comprises the steps of:
- receiving by the virtual machine a read or write request from the at least one first application program for executing a read or write operation on said at least one file system node,
- in case the requesting first application program is granted access to said at least one file system node, executing a read or write operation by the virtual machine on said at least one file system node,
▪ whereby the virtual machine writes first data provided by the first application program to said file system node, and/or
▪ whereby the virtual machine forwards second data read from said file system node to the first application program.

6. The computer-implemented method of claim 5, the method further comprising the steps of:
- encrypting by the virtual machine the first data before said first data is written into said file system node, and/or
- decrypting by the virtual machine the second data before forwarding said second data to the at least one first application program.

7. The computer-implemented method of anyone of claims 5 - 6, the method further comprising the steps of:
- encrypting by the file system the first data before said first data is written into the file system node, and/or
- decrypting by the file system the second data, the second data being decrypted before said second data is received by the virtual machine.

8. The computer-implemented method of anyone of claims 1 - 7, whereby a first package identifier of a first program class of an application program having previously stored data to one of the plurality of nodes is used as first group-ID of said node and whereby a second package identifier of a second program class of the at least one first application program is used as the second group-ID.

9. The computer-implemented method of anyone of claims 1 - 8,
- whereby the file system nodes comprise file system nodes of a first, a second and a third node type,
- whereby the first user-ID of a file system node of the first node type is the super-user-ID, the super-user-ID being a user-ID of a super-user, a super-user having super-user privileges,
- whereby the first user-ID of a file system node of the second node type is a user-ID of a normal-user, a normal user having default privileges, and
- whereby a file system node of the third node type is marked as globally accessible,
- whereby the virtual machine has assigned the super-user-ID,
the method further comprising the steps of:
- using, by the virtual machine, file system nodes of the first node type for storing system data required by the virtual machine for execution, whereby the file system prohibits any of the one or more first application programs from accessing file system nodes of the first node type and allows the virtual machine to access file system nodes of the first node type, the second and the third node type,
- using by the one or more first application programs one or more file system nodes of the second node type for storing runtime data, the runtime data being required by said one or more first application programs for execution, whereby each second user-ID assigned to the one or more first application programs is a normal-user-ID, whereby the file system prohibits any of the one or more first application programs from accessing file system nodes of the second node type in case the evaluation of the assigned first- and second user-IDs and/or group-IDs returns a negative result,
- using by the virtual machine and by said one or more first application programs the file system nodes of the third node type for storing public data, whereby the file system grants access to any of the one or more first application programs.

10. The computer-implemented method of anyone of claims 1 - 9, whereby an authentication proxy (320) is operable to execute an additional security operation for granting or prohibiting the at least one first application program access to the at least one file system node, the security operation being selected from the group consisting of:
- evaluation of a white-list, and/or
- evaluation of a security token, and/or
- executing a cryptographic authentication method,
- whereby the security token is selected from the group comprising biometrical data, certificates and a passphrase, and
- whereby evaluating the white-list comprises the steps of:
▪ matching the second user-ID and/or second group-ID of the first application program against a plurality of fourth user-IDs and/or group-IDs of the white-list,
▪ granting access to the first application program to the at least one file system node only in case said second user-ID and/or second group-ID matches at least one of the plurality of fourth user-IDs and/or group-IDs.

11. The computer-implemented method of claim 10, wherein the authentication proxy is one of:
- a component of the VM,
- a component of one of the first application program,
- another one of the first application programs running on the VM,
- a second application program accessed by the VM over a network, and
- a trusted virtual application being interoperable with the file system and running over the VM.

12. The computer-implemented method of anyone of claims 1 - 10, wherein the file system is based on a mapping, the mapping being a pl-mapping (M) and/or a geometrical mapping,
- wherein the pl-mapping is a mapping of physical memory blocks of one or more non-volatile physical storage media to logical memory blocks of one or more logical storage volumes, and
- wherein the geometrical mapping is a mapping of one or more logical memory blocks of a non-volatile storage medium and one or more memory blocks of a volatile storage medium to logical memory blocks of one or more logical storage volumes.

13. The computer-implemented method of anyone of claims 11-12, the method further comprising the steps of:
- monitoring and determining by the file system the frequency of write operations executed on each physical memory block;
- distributing by the file system write operations of the virtual machine among said physical memory blocks, whereby the distribution is based on dynamically modifying the pl-mapping.

14. A computer-readable non-transitory storage medium (215, PS I - PS IV) of a smart card (203) comprising instructions which, when executed by a processing device (203) cause the processing device to execute the method of any of the above claims 1-13.

15. A smart card (203) comprising a virtual machine (212) and a file system (314), the file system being a process for storing and organizing data objects for manipulation and retrieval by the operating system of the smart card, the file system organizing flash memory of the smart card into blocks to store data and is used as a frontend for all entities of a smart card to access the flash memory to store long-term data, and comprising means being adapted to perform:
- operating the virtual machine (212) over the file system (314),
- whereby the file system comprises a plurality of file system nodes (FSN1 - FSN13), each of said file system nodes being a file, a directory or a symbolic link,
- whereby each file system node is assigned with a first user-ID (U-ID A, U-ID B) and/or a first group-ID (G-ID T),
- whereby one or more first application programs (208-209) are running on the virtual machine,
- assigning (101) at least one of the first application programs a second user-ID (U-ID A', U-ID B') and/or a second group-ID (G-ID T'),
- accessing (102) at least one of the plurality of file system nodes by the virtual machine for providing read and/or write access for the at least one first application program to said at least one file system node,
- evaluating (103), by the file system, the first user-ID and/or first group-ID of the at least one file system node and the second user-ID and/or group-ID of said at least one first application program, whereby the evaluation returns a positive result only if at least one of a set of conditions applies, the at least one condition being selected from the group consisting of:
▪ if the first user-ID of said file system node matches the assigned second user-ID, or
▪ if the second user-ID is a super-user-ID, or
▪ if the second group-ID is a super-group-ID, or
▪ if the first group-ID of said file system node matches the assigned second group-ID, or
▪ if the user being assigned the second user-ID belongs to a user group owning the assigned first group-ID of said file system node, or
▪ if the file system node is marked as globally accessible,
and whereby the evaluation returns a negative result if none of said condition applies,
- granting (104) access by the file system to the at least one first application program to said at least one file system node in case the evaluation result is positive, and
- prohibiting (105) by the file system the at least one first application program from accessing said at least one file system node if the evaluation result is negative.

## Patentansprüche

1. Computerimplementiertes Verfahren zum Bedienen einer virtuellen Maschine (212) auf einer Smart-Card (203) über ein Dateisystem (314) der Smart Card, wobei das Dateisystem ein Prozess zum Speichern und Organisieren von Datenobjekten zum Manipulieren und zum Abrufen durch das Betriebssystem der Smart Card ist, wobei das Dateisystem einen Flash-Speicher der Smart Card in Blöcken organisiert, um Daten zu speichern, und als Frontend für alle Entitäten einer Smart Card verwendet wird, um auf den Flash-Speicher zuzugreifen, um langlebige Daten zu speichern,
- wobei das Dateisystem mehrere Datensystemknoten (FSN1-FSN13) umfasst, wobei jeder von den Datensystemknoten eine Datei, ein Verzeichnis oder eine symbolische Verknüpfung ist,
- wobei jedem Dateisystemknoten eine erste Nutzer-ID (U-ID A, U-ID B) und/oder eine erste Gruppen-ID (G-ID T) zugewiesen ist,
- wobei ein oder mehrere erste Anwendungsprogramme (208-209) auf der virtuellen Maschine laufen,
wobei das Verfahren die folgenden Schritte umfasst:
- Zuweisen (101) einer zweiten Nutzer-ID (U-ID A', U-ID B') und/oder einer zweiten Gruppen-ID (G-ID T') zu mindestens einem von den ersten Anwendungsprogrammen,
- Zugreifen (102) auf mindestens einen von den mehreren Dateisystemknoten durch die virtuelle Maschine, um dem mindestens einen ersten Anwendungsprogramm einen Lese- und/oder Schreibzugriff auf den mindestens einen Dateisystemknoten zu ermöglichen,
- Evaluieren (103) der ersten Nutzer-ID und/oder der ersten Gruppen-ID des mindestens einen Dateisystemknotens und der zweiten Nutzer-ID und/oder Gruppen-ID des mindestens einen ersten Anwendungsprogramms durch das Dateisystem, wobei die Evaluierung nur dann ein positives Ergebnis liefert, wenn mindestens eine von einem Satz von Bedingungen erfüllt ist, wobei die mindestens eine Bedingung ausgewählt ist aus der Gruppe bestehend aus:
▪ dass die erste Nutzer-ID des Dateisystemknotens mit der zugewiesenen zweiten Nutzer-ID übereinstimmt, oder
▪ dass die zweite Nutzer-ID eine Super-Nutzer-ID ist, oder
▪ dass die zweite Gruppen-ID eine Super-Gruppen-ID ist, oder
▪ dass die erste Gruppen-ID des Dateisystemknotens mit der zugewiesenen zweiten Gruppen-ID übereinstimmt, oder
▪ dass der Nutzer, dem die zweite Nutzer-ID zugewiesen ist, zu einer Nutzergruppe gehört, der die zugewiesene erste Nutzer-ID des Dateisystemknotens gehört, oder
▪ dass der Dateisystemknoten als global zugänglich markiert ist,
und wobei die Evaluierung nur dann ein negatives Ergebnis liefert, wenn keine dieser Bedingungen erfüllt ist,
- Gewähren (104) eines Zugriffs auf den mindestens einen Dateisystemknoten für das mindestens eine erste Anwendungsprogramm durch das Dateisystem, falls das Evaluierungsergebnis positiv ist, und
- Verweigern (105) eines Zugriffs auf den mindestens einen Dateisystemknoten für das mindestens eine erste Anwendungsprogramm durch das Dateisystem, falls das Evaluierungsergebnis negativ ist.

2. Computerimplementiertes Verfahren nach Anspruch 1, wobei dem mindestens einen ersten Anwendungsprogramm von der virtuellen Maschine die zweite Nutzer-ID und/oder die zweite Gruppen-ID zugewiesen wird bzw. werden.

3. Computerimplementiertes Verfahren nach Anspruch 1, wobei dem mindestens einen Dateisystemknoten von der virtuellen Maschine die erste Nutzer-ID und/oder die erste Gruppen-ID zugewiesen wird bzw. werden.

4. Computerimplementiertes Verfahren nach einem der Ansprüche 1-3, wobei das Verfahren ferner den Schritt des dynamischen Zuweisens einer dritten Nutzer-ID und/oder einer dritten Gruppen-ID zu dem mindestens einen ersten Anwendungsprogramm durch die virtuelle Maschine umfasst, wodurch die zweite Nutzer-ID und/oder Gruppen-ID ersetzt wird und die Zugriffsrechte des mindestens einen ersten Anwendungsprogramms für den Zugriff auf die Dateisystemknoten dynamisch geändert werden.

5. Computerimplementiertes Verfahren nach einem der Ansprüche 1-4, wobei der Schritt des Gewährens eines Zugriffs für das mindestens eine erste Anwendungsprogramm die folgenden Schritte umfasst:
- Empfangen einer Lese- oder Schreibanfrage von dem mindestens einen ersten Anwendungsprogramm an der virtuellen Maschine, um eine Lese- oder Schreiboperation an dem mindestens einen Dateisystemknoten durchzuführen,
- für den Fall, dass dem anfragenden ersten Anwendungsprogramm Zugriff auf den mindestens einen Dateisystemknoten gewährt wird, Ausführen einer Lese- oder Schreiboperation durch die virtuelle Maschine an dem mindestens einen Dateisystemknoten,
▪ wobei die virtuelle Maschine erste Daten, die vom ersten Anwendungsprogramm bereitgestellt werden, in den Dateisystemknoten schreibt, und/oder
▪ wobei die virtuelle Maschine zweite Daten, die aus dem Dateisystemknoten gelesen werden, an das erste Anwendungsprogramm weitergibt.

6. Computerimplementiertes Verfahren nach Anspruch 5, wobei das Verfahren ferner die folgenden Schritte umfasst:
- Verschlüsseln der ersten Daten durch die virtuelle Maschine, bevor die ersten Daten in den Dateisystemknoten geschrieben werden, und/oder
- Entschlüsseln der zweiten Daten durch die virtuelle Maschine, bevor die zweiten Daten an das mindestens eine erste Anwendungsprogramm weitergegeben werden.

7. Computerimplementiertes Verfahren nach einem der Ansprüche 5-6, wobei das Verfahren ferner die folgenden Schritte umfasst:
- Verschlüsseln der ersten Daten durch das Dateisystem, bevor die ersten Daten in den Dateisystemknoten geschrieben werden, und/oder
- Entschlüsseln der zweiten Daten durch das Dateisystem, wobei die zweiten Daten entschlüsselt werden, bevor die zweiten Daten von der virtuellen Maschine empfangen werden.

8. Computerimplementiertes Verfahren nach einem der Ansprüche 1-7, wobei eine erste Paketkennung einer ersten Programmklasse eines Anwendungsprogramms, das zuvor Daten an einem von den mehreren Knoten gespeichert hat, als erste Gruppen-ID des Knotens verwendet wird, und wobei eine zweite Paketkennung einer zweiten Programmklasse des mindestens einen ersten Anwendungsprogramms als zweite Gruppen-ID verwendet wird.

9. Computerimplementiertes Verfahren nach einem der Ansprüche 1-8,
- wobei die Dateisystemknoten Dateisystemknoten eines ersten, eines zweiten und eines dritten Knotentyps umfassen,
- wobei die erste Nutzer-ID eines Dateisystemknotens des ersten Knotentyps die Super-Nutzer-ID ist, die Super-Nutzer-ID eine Nutzer-ID eines Super-Nutzers ist, ein Super-Nutzer Super-Nutzer-Privilegien hat,
- wobei die erste Nutzer-ID eines Dateisystemknotens des zweiten Knotentyps eine Nutzer-ID eines Normal-Nutzers ist, wobei ein Normal-Nutzer voreingestellte Privilegien hat, und
- wobei ein Dateisystemknoten des dritten Knotentyps als global zugänglich markiert ist,
- wobei der virtuellen Maschine die Super-Nutzer-ID zugewiesen ist,
wobei das Verfahren ferner die folgenden Schritte umfasst:
- Verwenden von Dateisystemknoten des ersten Knotentyps durch die virtuelle Maschine zum Speichern von Systemdaten, die von der virtuellen Maschine zur Ausführung gebraucht werden, wobei das Dateisystem das eine oder jedes von den mehreren Anwendungsprogrammen daran hindert, auf Dateisystemknoten des ersten Knotentyps zuzugreifen, und der virtuellen Maschine gestattet, auf Datensystemknoten des ersten Knotentyps, des zweiten und des dritten Knotentyps zuzugreifen,
- Verwenden eines oder mehrerer Dateisystemknoten des zweiten Knotentyps durch das eine oder die mehreren ersten Anwendungsprogramme zum Speichern von Laufzeitdaten, wobei die Laufzeitdaten von dem einen oder den mehreren ersten Anwendungsprogrammen zur Ausführung benötigt werden, wobei jede zweite Nutzer-ID, die dem einen oder den mehreren ersten Anwendungsprogrammen zugewiesen wird, eine Normal-Nutzer-ID ist, wobei das Dateisystem das eine erste oder jedes von den mehreren ersten Anwendungsprogrammen daran hindert, auf Dateisystemknoten des zweiten Knotentyps zuzugreifen, falls die Evaluierung der zugewiesenen ersten und zweiten Nutzer-IDs und/oder Gruppen-IDs ein negatives Ergebnis liefert,
- Verwenden der Dateisystemknoten des dritten Knotentyps durch die virtuelle Maschine und durch das eine oder die mehreren ersten Anwendungsprogramme zum Speichern öffentlicher Daten, wobei das Dateisystem dem einen oder jedem von den mehreren ersten Anwendungsprogrammen Zugriff gewährt.

10. Computerimplementiertes Verfahren nach einem der Ansprüche 1-9, wobei ein Authentifizierung-Proxy (320) dazu dient, eine zusätzliche Sicherheitsoperation für die Gewährung oder die Verweigerung eines Zugriffs auf den mindestens einen Dateisystemknoten für das mindestens eine erste Anwendungsprogramm auszuführen, wobei die Sicherheitsoperation ausgewählt wird aus der Gruppe bestehend aus:
- Evaluieren einer Weißen Liste und/oder
- Evaluieren eines Sicherheits-Tokens und/oder
- Ausführen eines kryptographischen Authentifizierungsverfahrens,
- wobei der Sicherheits-Token ausgewählt ist aus der Gruppe, die biometrische Daten, Zertifikate und eine Passphrase umfasst, und
- wobei das Evaluieren der Weißen Liste die folgenden Schritte umfasst:
▪ Abgleichen der zweiten Nutzer-ID und/oder der zweiten Gruppen-ID des ersten Anwendungsprogramms mit mehreren vierten Nutzer-IDs und/oder Gruppen-IDs der Weißen Liste,
▪ Gewähren eines Zugriffs auf den mindestens einen Dateisystemknoten für das erste Anwendungsprogramm nur in dem Fall, dass die zweite Nutzer-ID und/oder die zweite Gruppen-ID mit mindestens einer von den mehreren vierten Nutzer-IDs und/oder Gruppen-IDs übereinstimmt bzw. übereinstimmen.

11. Computerimplementiertes Verfahren nach Anspruch 10, wobei der Authentifizierung-Proxy eine der folgenden ist:
- eine Komponente der VM,
- eine Komponente von einem von dem ersten Anwendungsprogramm,
- einem anderen von den ersten Anwendungsprogrammen, die auf der VM laufen,
- einem zweiten Anwendungsprogramm, auf das von der VM über ein Netzwerk zugegriffen wird, und
- eine vertrauenswürdige virtuelle Anwendung, die mit dem Dateisystem kompatibel ist und über der VM läuft.

12. Computerimplementiertes Verfahren nach einem der Ansprüche 1-10, wobei das Dateisystem auf einem Mapping basiert, wobei das Mapping ein pl-Mapping (M) und/oder ein geometrisches Mapping ist,
- wobei das pl-Mapping ein Mapping von physischen Speicherblöcken von einem oder mehreren nichtflüchtigen physischen Speichermedien auf logische Speicherblöcke mit einem oder mehreren logischen Speichervolumina ist, und
- wobei das geometrische Mapping ein Mapping von einem oder mehreren logischen Speicherblöcken eines nichtflüchtigen Speichermediums und von einem oder mehreren Speicherblöcken eines flüchtigen Speichermediums auf logische Speicherblöcke mit einem oder mehreren logischen Speichervolumina ist.

13. Computerimplementiertes Verfahren nach einem der Ansprüche 11-12, wobei das Verfahren ferner die folgenden Schritte umfasst:
- Überwachen und Bestimmen der Frequenz von Schreiboperationen, die an den einzelnen physischen Speicherblöcken ausgeführt werden, durch das Dateisystem;
- Verteilen von Schreiboperationen der virtuellen Maschine auf die physischen Speicherblöcke durch das Dateisystem, wobei die Verteilung auf dynamischer Modifizierung des pl-Mapping basiert.

14. Computerlesbares, nichtflüchtiges Speichermedium (215, PS I - PS IV) einer Smart Card (203), Befehle umfassend, deren Ausführung durch eine Verarbeitungsvorrichtung (203) bewirkt, dass die Verarbeitungsvorrichtung das Verfahren nach einem der obigen Ansprüche 1-13 ausführt.

15. Smart-Card (203), eine virtuelle Maschine (212) und ein Dateisystem (314) umfassend, wobei das Dateisystem ein Prozess zum Speichern und Organisieren von Datenobjekten zum Manipulieren und zum Abrufen durch das Betriebssystem der Smart Card ist, wobei das Dateisystem einen Flash-Speicher der Smart Card in Blöcken organisiert, um Daten zu speichern, und als Frontend für alle Entitäten einer Smart Card verwendet wird, um auf den Flash-Speicher zuzugreifen, um langlebige Daten zu speichern, und eine Einrichtung umfassend, die dafür ausgelegt ist, folgendes durchzuführen:
- Bedienen der virtuellen Maschine (212) über das Dateisystem (314),
- wobei das Dateisystem mehrere Dateisystemknoten (FSN1-FSN13) umfasst, wobei jeder von den Dateisystemknoten eine Datei, ein Verzeichnis oder eine symbolische Verknüpfung ist,
- wobei jedem Dateisystemknoten eine erste Nutzer-ID (U-ID A, U-ID B) und/oder eine erste Gruppen-ID (G-ID T) zugewiesen ist,
- wobei ein oder mehrere erste Anwendungsprogramme (208-209) auf der virtuellen Maschine laufen,
- Zuweisen (101) einer zweiten Nutzer-ID (U-ID A', U-ID B') und/oder einer zweiten Gruppen-ID (G-ID T') zu mindestens einem von den ersten Anwendungsprogrammen,
- Zugreifen (102) auf mindestens einen von den mehreren Dateisystemknoten durch die virtuelle Maschine, um dem mindestens einen ersten Anwendungsprogramm einen Lese- und/oder Schreibzugriff auf den mindestens einen Dateisystemknoten zu ermöglichen,
- Evaluieren (103) der ersten Nutzer-ID und/oder der ersten Gruppen-ID des mindestens einen Dateisystemknotens und der zweiten Nutzer-ID und/oder Gruppen-ID des mindestens einen ersten Anwendungsprogramms durch das Dateisystem, wobei die Evaluierung nur dann ein positives Ergebnis liefert, wenn mindestens eine von einem Satz von Bedingungen erfüllt ist, wobei die mindestens eine Bedingung ausgewählt ist aus der Gruppe bestehend aus:
▪ dass die erste Nutzer-ID des Dateisystemknotens mit der zugewiesenen zweiten Nutzer-ID übereinstimmt, oder
▪ dass die zweite Nutzer-ID eine Super-Nutzer-ID ist, oder
▪ dass die zweite Gruppen-ID eine Super-Gruppen-ID ist, oder
▪ dass die erste Gruppen-ID des Dateisystemknotens mit der zugewiesenen zweiten Gruppen-ID übereinstimmt, oder
▪ dass der Nutzer, dem die zweite Nutzer-ID zugewiesen ist, zu einer Nutzergruppe gehört, der die zugewiesene erste Nutzer-ID des Dateisystems gehört, oder
▪ dass der Dateisystemknoten als global zugänglich markiert ist, und wobei die Evaluierung dann ein negatives Ergebnis liefert, wenn keine dieser Bedingungen erfüllt ist,
- Gewähren (104) eines Zugriffs auf den mindestens einen Dateisystemknoten für das mindestens eine erste Anwendungsprogramm durch das Dateisystem, falls das Evaluierungsergebnis positiv ist, und
- Verweigern (105) eines Zugriffs auf den mindestens einen Dateisystemknoten für das mindestens eine erste Anwendungsprogramm durch das Dateisystem, falls das Evaluierungsergebnis negativ ist.

## Revendications

1. Procédé mis en oeuvre par ordinateur pour faire fonctionner une machine virtuelle (212) sur une carte électronique (203) par un système de fichiers (314) de la carte électronique, le système de fichiers étant un procédé de stockage et d'organisation d'objets de données pour une manipulation et une extraction par le système d'exploitation de la carte électronique, le système de fichiers organisant la mémoire flash de la carte électronique en blocs pour stocker des données et est utilisé en tant qu'interface pour toutes les entités de la carte électronique afin d' accéder à la mémoire flash pour stocker des données de long terme,
- ce par quoi, le système de fichiers comprend une pluralité de noeuds de système de fichiers (FSN1 à FSN13), chacun desdits noeuds de système de fichiers étant un fichier, un répertoire ou un lien symbolique,
- ce par quoi, chaque noeud du système de fichiers est associé avec une première identification ID d'utilisateur (U-ID A, U-ID B) et/ou une première identification ID de groupe (G-ID T),
- ce par quoi, un ou plusieurs premiers programmes d'application (208 à 209) sont exécutés sur la machine virtuelle,
le procédé comprenant les étapes :
- d'attribution (101), à au moins un des premiers programmes d'application, d'une deuxième identification ID d'utilisateur (U-ID A', U-ID B') et/ou d'une deuxième ID de groupe (G-ID T'),
- d'accès (102) à au moins un de la pluralité des noeuds du système de fichier par la machine virtuelle pour fournir un accès à la lecture et/ou à l'écriture pour l'au moins un premier programme d'application audit au moins un noeud de système de fichiers,
- d'évaluation (103), par le système de fichiers, de la première ID d'utilisateur et/ou de la première ID de groupe de l'au moins un noeud de système de fichiers et de la deuxième ID d'utilisateur et/ou ID de groupe dudit au moins un premier programme d'application, ce par quoi l'évaluation renvoie un résultat positif uniquement si au moins une seule parmi un ensemble de conditions s'applique, l'au moins une seule condition étant choisie dans le groupe constitué par :
• si la première ID d'utilisateur dudit noeud du système de fichiers correspond à la deuxième ID d'utilisateur, ou
• si la deuxième ID d'utilisateur est une ID de super utilisateur, ou
• si la deuxième ID de groupe est une ID de super groupe, ou
• si la premier ID de groupe dudit noeud de système de fichiers correspond à la deuxième ID de groupe attribuée, ou
• si l'utilisateur à qui la deuxième ID d'utilisateur a été attribuée appartient à un groupe utilisateur possédant la première ID de groupe attribuée dudit noeud de système de fichiers, ou
• si le noeud de système de fichiers est indiqué comme globalement accessible,
et par quoi l'évaluation renvoie un résultat négatif si aucune desdites conditions ne s'applique,
- d'autorisation d'accès (104), par le système de fichiers, à l'au moins un premier programme d'application audit au moins un noeud de système de fichiers dans le cas où le résultat de l'évaluation est positif, et
- d'interdiction (105), par le système de fichiers, à l'au moins un premier programme d'application d'accéder audit au moins un noeud de système de fichiers si le résultat de l'évaluation est négatif.

2. Procédé mis en oeuvre par ordinateur selon la revendication 1, au moyen duquel la deuxième ID d'utilisateur et/ou la deuxième ID de groupe sont attribuées à l'au moins un premier programme d'application par la machine virtuelle.

3. Procédé mis en oeuvre par ordinateur selon la revendication 1, au moyen duquel la première ID d'utilisateur et/ou la première ID de groupe sont attribuées à l'au moins un noeud de système de fichier par la machine virtuelle.

4. Procédé mis en oeuvre par ordinateur selon l'une quelconque des revendications 1 à 3, le procédé comprenant en outre l'étape d'attribution de manière dynamique par la machine virtuelle d'une troisième ID d'utilisateur et/ou d'une troisième ID de groupe à l'au moins un premier programme d'application, remplaçant de cette façon la deuxième ID d'utilisateur et/ou ID de groupe et changeant de manière dynamique les droits d'accès audit au moins un premier programme d'application pour accéder aux noeuds de système de fichiers.

5. Procédé mis en oeuvre par ordinateur selon l'une quelconque des revendications 1à 4, au moyen duquel l'étape d'autorisation d'accès à l'au moins un premier programme d'application comprend les étapes de :
- réception, par la machine virtuelle, d'une demande de lecture ou d'écriture de la part de l'au moins un premier programme d'application pour exécuter une opération de lecture ou d'écriture sur ledit au moins un noeud de système de fichiers,
- dans le cas où la demande du premier programme d'application est d'autoriser l'accès audit au moins un noeud du système de fichiers, l'exécution d'une opération de lecture ou d'écriture par la machine virtuelle sur ledit au moins un noeud de système de fichiers,
• ce par quoi, la machine virtuelle écrit les premières données fournies par le premier programme d'application audit noeud du système de fichiers, et/ou
• ce par quoi, la machine virtuelle transmet les secondes données lues à partir dudit noeud du système de fichiers au premier programme d'application.

6. Procédé mis en oeuvre par ordinateur selon la revendication 5, le procédé comprenant en outre les étapes de :
- chiffrage, par la machine virtuelle, des premières données avant que lesdites premières données ne soient écrites dans ledit noeud de système de fichier, et/ou
- déchiffrement, par la machine virtuelle, des secondes données avant la transmission desdites secondes données à l'au moins un premier programme d'application.

7. Procédé mis en oeuvre par ordinateur selon l'une quelconque des revendications 5 à 6, le procédé comprenant en outre les étapes de :
- chiffrement, par le système de fichier, des premières données avant que lesdites premières données ne soient écrites dans le noeud du système de fichiers, et/ou
- déchiffrement, par le système de fichier, des secondes données, les secondes données étant déchiffrées avant que lesdites secondes données ne soient reçues par la machine virtuelle.

8. Procédé mis en oeuvre par ordinateur selon l'une quelconque des revendications 1 à 7, au moyen duquel un premier identifieur de paquet d'une première classe de programme d'un programme d'application ayant préalablement stocké des données vers l'un de la pluralité des noeuds est utilisé en tant que première ID de groupe dudit noeud et au moyen duquel un second identifieur de paquet d'une seconde classe de programme de l'au moins un premier programme d'application est utilisé en tant que seconde ID de groupe.

9. Procédé mis en oeuvre par ordinateur selon l'une quelconque des revendications 1à 8,
- au moyen duquel les noeuds de système de fichiers comprennent les noeuds de système de fichiers d'un premier, d'un deuxième et d'un troisième type de noeud,
- au moyen duquel la première ID d'utilisateur du noeud de système de fichiers du premier type de noeud est l'ID de super utilisateur, l'Id de super utilisateur étant une ID d'utilisateur d'un super utilisateur, un super utilisateur ayant les privilèges de super utilisateur,
- au moyen duquel la première ID d'utilisateur du noeud du système de fichiers du second type de noeud est une ID d'utilisateur d'un utilisateur classique, un utilisateur classique ayant des privilèges par défaut, et
- au moyen duquel un noeud du système de fichiers du troisième type de noeud est indiqué comme étant globalement accessible,
- au moyen duquel la machine virtuelle a attribué l'ID de super utilisateur,
le procédé comprenant en outre les étapes :
- d'utilisation, par la machine virtuelle, des noeuds de système de fichiers du premier type de noeud pour stocker les données du système demandées par la machine virtuelle pour l'exécution, au moyen duquel le système de fichiers interdit à n'importe lequel des un seul ou plusieurs premiers programmes d'application d'accéder aux noeuds de système de fichiers du premier type de noeud et autorise la machine virtuelle à accéder aux noeuds de système de fichiers du premier type de noeud, du second et du troisième type de noeud,
- d'utilisation par un seul ou plusieurs premiers programmes d'application d'un seul ou de plusieurs noeuds de système de fichiers du second type de noeud pour stocker les données d'exécution, les données d'exécution étant demandées par ledit un seul ou plusieurs premiers programmes d'application pour l'exécution, au moyen duquel chaque seconde ID d'utilisateur attribuée au seul ou à plusieurs premiers programme d'application est une ID d'utilisateur classique, au moyen duquel le système de fichiers interdit n'importe lequel parmi le seul ou les plusieurs premiers programmes d'application d'accéder aux noeuds de système de fichier du second type de noeud dans le cas où l'évaluation des premières et des secondes identifications d'utilisateur et/ou identifications de groupe attribuées renvoie un résultat négatif,
- d'utilisation, par la machine virtuelle et par ledit un seul ou plusieurs premiers programmes d'application, des noeuds de système de fichiers du troisième type de noeud pour stocker des données publiques, au moyen desquelles le système de fichiers autorise l'accès à n'importe lequel parmi le seul ou les plusieurs premiers programmes d'application.

10. Procédé mis en oeuvre par ordinateur selon l'une quelconque des revendications 1 à 9, au moyen duquel un proxy d'authentification (320) est opérationnel pour exécuter une opération de sécurité supplémentaire afin d'autoriser ou d'interdire l'accès du au moins un premier programme d'application à l'au moins un noeud du système de fichiers, l'opération de sécurité étant choisie dans le groupe constitué de :
- l'évaluation d'une liste blanche, et/ou
- l'évaluation d'un jeton de sécurité, et/ou
- l'exécution d'un procédé d'authentification cryptographique,
- ce par quoi le jeton de sécurité est choisi dans le groupe comprenant des données biométriques, des certificats et une phrase secrète, et
- ce par quoi la liste blanche comprend les étapes de :
• comparaison de la seconde ID d'utilisateur et/ou de la seconde ID de groupe du premier programme d'application avec une pluralité de quatrièmes identifications d'utilisateur et/ou identifications de groupe de la liste blanche,
• d'autorisation d'accès au premier programme d'application de l'au moins un noeud du système de fichiers dans le cas où ladite seconde ID d'utilisateur et/ou seconde ID de groupe correspond à au moins une seul de la pluralité des quatrièmes identifications d'utilisateur et/ou identifications de groupe.

11. Procédé mis en oeuvre par ordinateur selon la revendication 10, dans lequel le proxy d'authentification est un parmi :
- un composant de la machine virtuelle MV,
- un composant d'un des premiers programmes d'application,
- un autre des premiers programmes d'application exécutés sur la MV,
- un deuxième programme d'application auquel la MV a accès par un réseau, et
- une application virtuelle sûre qui est interopérable avec le système de fichiers et qui est exécutée sur la MV.

12. Procédé mis en oeuvre par ordinateur selon l'une quelconque des revendications 1 à 10, dans lequel le système de fichiers est fondé sur une cartographie, la cartographie étant une cartographie par photoluminescence pl (M) et/ou une cartographie géométrique,
- où la cartographie pl est une cartographie de blocs de mémoire physique d'un ou de plusieurs supports de stockage physique non volatils vers des blocs de mémoire logique d'un ou de plusieurs volumes logiques de stockage, et
- où la cartographie géométrique est une cartographie d'un ou de plusieurs blocs de mémoire logique d'un support de stockage non volatil et d'un ou de plusieurs blocs de mémoire d'un support de stockage volatil vers les blocs de mémoire logique d'un ou de plusieurs volumes logiques de stockage.

13. Procédé mis en oeuvre par ordinateur selon l'une quelconque des revendications 11 à 12, le procédé comprenant en outre les étapes de :
- surveillance et de détermination, par le système de fichiers, de la fréquence des opérations d'écriture exécutées sur chacun des blocs de mémoire physique ;
- distribution, par le système de fichiers, des opérations d'écriture de la machine virtuelle parmi lesdits blocs de mémoire physique, au moyen duquel la distribution repose sur la modification de manière dynamique de la cartographie par pl.

14. Support de stockage non transitoire lisible par ordinateur (215, PS I à PS IV) d'une carte électronique (203) comprenant des instructions qui, lorsqu'elles sont exécutées par un dispositif de traitement (203), amènent le dispositif de traitement à exécuter le procédé selon l'une quelconque des revendications 1 à 13 ci-dessus.

15. Carte électronique (203) comprenant une machine virtuelle (212) et un système de fichiers (314), le système de fichiers étant un procédé pour stocker et organiser des objets de données pour une manipulation et une extraction par le système d'exploitation de la carte électronique, le système de fichiers organisant la mémoire flash de la carte électronique en blocs pour stocker les données et est utilisé en tant qu'interface pour toutes les entités de la carte électronique afin d'accéder à la mémoire flash pour stocker les données de long terme, et comprenant des moyens qui sont appropriés pour réaliser :
- l'exploitation de la machine virtuelle (212) à partir du système de fichiers (314),
- ce par quoi le système de fichiers comprend une pluralité de noeuds de système de fichiers (FSN1 à FSN13), chacun desdits noeuds de système de fichiers étant un fichier, un répertoire ou un lien symbolique,
- ce par quoi, à chaque noeud de système de fichiers est attribuée une première ID d'utilisateur (U-ID A, U-ID B) et/ou une première ID de groupe (G-ID T),
- ce par quoi un ou plusieurs premiers programmes d'application (208 à 209) sont exécutés sur la machine virtuelle,
- l'attribution (101) à au moins un des premiers programmes d'application d'une deuxième ID d'utilisateur (U-ID A', U-ID B') et/ou d'une deuxième ID de groupe (G-ID T'),
- l'accès (102) à au moins un de la pluralité des noeuds de système de fichiers par la machine virtuelle pour fournir un accès à la lecture et/ou à l'écriture pour l'au moins un premier programme d'application audit au moins un noeud de système de fichiers,
- l'évaluation (103), par le système de fichiers, de la première ID d'utilisateur et/ou de la première ID de groupe de l'au moins un noeud de système de fichiers et de la deuxième ID d'utilisateur et/ou ID de groupe dudit au moins un premier programme d'application, au moyen desquelles l'évaluation renvoie un résultat positif uniquement si au moins une seule d'un ensemble de conditions s'applique, l'au moins une seule condition étant choisie dans le groupe constitué par :
• si le premier ID d'utilisateur dudit noeud du système de fichier correspond au deuxième ID d'utilisateur, ou
• si le deuxième ID d'utilisateur est un ID de super utilisateur, ou
• si le deuxième ID de groupe est un ID de super groupe, ou
• si le premier ID de groupe dudit noeud du système de fichier correspond au deuxième ID de groupe attribué, ou
• si l'utilisateur à qui le deuxième ID d'utilisateur a été attribué appartient à un groupe utilisateur possédant le premier ID de groupe attribué dudit noeud du système de fichier, ou
• si le noeud du système de fichier est indiqué comme globalement accessible,
et au moyen duquel l'évaluation renvoie un résultat négatif si aucune desdites conditions ne s'applique,
- d'autorisation d'accès (104) par le système de fichier à l'au moins un premier programme d'application audit au moins un noeud du système de fichier dans le cas où le résultat de l'évaluation est positif, et
- d'interdiction (105) par le système de fichier à l'au moins un premier programme d'application d'accéder audit au moins un noeud du système de fichier si le résultat de l'évaluation est négatif.
